# EUROPEAN PATENT SPECIFICATION

(11) **EP 4 299 920 B1**
(45) Date of publication and mention of the grant of the patent: **25.06.2025**
(21) Application number: 22787456.7
(22) Date of filing: 08.04.2022
(51) Int. Cl.: F15B 11/17, F15B 13/06

(54) **VEHICLE, HYDRAULIC SYSTEM FOR POWERTRAIN OF VEHICLE, AND CONTROL METHOD THEREFOR**
FAHRZEUG, HYDRAULIKSYSTEM FÜR ANTRIEBSSTRANG EINES FAHRZEUGS UND STEUERUNGSVERFAHREN DAFÜR
VÉHICULE, SYSTÈME HYDRAULIQUE POUR GROUPE MOTOPROPULSEUR DE VÉHICULE ET PROCÉDÉ DE COMMANDE ASSOCIÉ

(30) Priority: 15.04.2021 CN 202110406463
(43) Date of publication of application: 03.01.2024
(73) Proprietor: BYD Company Limited, Shenzhen, Guangdong 518118 (CN)
(72) Inventor: ZHU, Futang, Shenzhen, Guangdong 518118 (CN); ZHANG, Hui, Shenzhen, Guangdong 518118 (CN); WANG, Chunsheng, Shenzhen, Guangdong 518118 (CN)
(74) Representative: Dehns Germany Partnerschaft mbB
(86) International application number: PCT/CN2022/085872
(87) International publication number: WO 2022/218230

(56) References cited:
- CN-A- 103 419 622
- CN-A- 103 975 180
- CN-A- 110 219 971
- CN-A- 110 219 971
- CN-A- 112 112 956
- CN-A- 112 112 956
- CN-U- 211 649 006
- JP-A- 2004 140 881
- US-A1- 2009 232 673
- US-A1- 2018 023 701

## Description

### FIELD

The present invention relates to the field of vehicles, and particularly to a vehicle, a hydraulic system for a powertrain of a vehicle, and a control method thereof.

### BACKGROUND

With the diversification of energy sources for vehicles, the powertrain of a hybrid vehicle integrates components in many fields, including gears, clutches, drive motors, generators, controllers, etc. These parts need to be cooled to operate at appropriate temperatures. In the related art, cooling oil paths of a plurality of parts are controlled by a pump, and the cooling oil paths of the parts are respectively connected to the pump through throttle valves. To be specific, the cooling and lubrication of the parts are distributed according to the ratio of the sizes of the throttle valves. Therefore, in the related art, to satisfy the flow rate required by a part having the highest cooling demand, the supply of cooling for other parts is likely to exceed corresponding demands, and consequently some parts cannot operate in an efficient temperature range, resulting in low efficiency of the powertrain.

CN 112 112 956 A discloses a gearbox hydraulic control system which is suitable for a hybrid gearbox. The gearbox hydraulic control system comprises an oil tank and an oil suction path for outputting hydraulic oil, oil outlets of a first mechanical pump and a second mechanical pump form a main oil path, and the main oil path forms a cooling oil path after passing through a cooler; the cooling oil path conveys cooled hydraulic oil to a first motor, a second motor, a gearbox gear set, an input shaft, an output shaft and a clutch to be lubricated and cooled; and two oil paths connected in parallel are arranged in the cooling oil path conveyed to the first motor, a throttling hole playing a flow limiting role is formed in the first oil path, a switch valve is arranged in the second oil path, the switch valve is a two-position two-way valve and is in a normally-closed state, and the pressure of the driving side of the switch valve is equal to the pressure of the oil outlet of the first mechanical pump. CN 110 219 971 also shows a known vehicle powertrain.

### SUMMARY

The present invention aims to solve, at least to some extent, one of the technical problems in the related art.

According to the invention, a vehicle and a method for controlling a hydraulic system of the vehicle are proposed with the features of the independent patent claims. Advantageous embodiments are the subject of the dependent claims and the following description.

A first aspect of the present invention provides a vehicle, including a powertrain, a hydraulic system, a controller, a power distribution module, a pressure calculation module, a terminal flow calculation module, and a hydraulic coordination module. The powertrain includes one or more of a drive motor, a generator, a clutch, and a transmission system. The hydraulic system includes an oil tank, a main cooling oil path, and a plurality of cooling branches. One end of the main cooling oil path is communicated with the oil tank. A first oil pump and a cooler are arranged on the main cooling oil path. The plurality of cooling branches are connected to another end of the main cooling oil path. The first oil pump is configured to pump an oil in the oil tank to the cooling branches. A control element is arranged on each of the cooling branches. The control element is configured to control opening and closing of the corresponding cooling branch. The plurality of cooling branches is configured to cool one or more of the drive motor, the generator, the clutch, and the transmission system. The hydraulic system further includes a driving oil path, the driving oil path is connected between the oil tank and the clutch, a second oil pump and a pressure control solenoid valve are arranged on the driving oil path, the second oil pump is configured to pump the oil to the driving oil path, and the driving oil path is configured to control engagement and disengagement of the clutch

The controller is configured to receive traveling demand information and road condition information. The power distribution module is configured to calculate rotational speed information and torque information required by each power terminal of the powertrain according to the traveling demand information and the road condition information. The power terminal includes one or more of a drive motor, a generator, a clutch, and a transmission system. The pressure calculation module is configured to calculate a driving pressure requirement according to the rotational speed information and the torque information from the power distribution module. The terminal flow calculation module is configured to calculate a cooling flow requirement of each power terminal according to the rotational speed information and the torque information from the power distribution module and an oil temperature of the main cooling oil path. The hydraulic coordination module is configured to calculate a rotational speed of the first oil pump, a rotational speed of the second oil pump, the opening degree of the control element, and an opening degree of the pressure control solenoid valve according to the driving pressure requirement and the cooling flow requirement of each power terminal.

Therefore, the cooling branches and the control elements form an integrated cooling valve group structure, and each solenoid valve can independently open or close and adjust the cooling branch, to realize independent flow control, thereby independently adjusting and controlling the cooling flow for each power terminal.

A second aspect of the present invention provides a method for controlling a hydraulic system for a powertrain of the vehicle, including:
calculating rotational speed information and torque information required by each power terminal of the powertrain according to the traveling demand information and the road condition information, the power terminal including one or more of a drive motor, a generator, a clutch, and a transmission system; calculating a driving pressure requirement and a cooling flow requirement of each power terminal according to the rotational speed information and the torque information required by each power terminal; and calculating a rotational speed of the first oil pump, a rotational speed of the second oil pump, a flow rate in the cooling branch, and an opening degree of the pressure control solenoid valve according to the driving pressure requirement and the cooling flow requirement of each power terminal.

Additional aspects and advantages of the present invention will be partly given in and partly apparent from the description below, or understood through practice of the present invention.

### BRIEF DESCRIPTION OF THE DRAWINGS

FIG. 1 is a schematic diagram of a hydraulic system of a vehicle according to an embodiment of the present invention;
FIG. 2 is a schematic diagram of a hydraulic system of a vehicle according to an embodiment of the present invention (where a hybrid vehicle operates in an electric vehicle mode);
FIG. 3 is a schematic diagram of a hydraulic system of a vehicle according to an embodiment of the present invention (where a hybrid vehicle operates in a parallel mode);
FIG. 4 is a schematic diagram of a hydraulic system of a vehicle according to an embodiment of the present invention (where a hybrid vehicle operates in a serial mode);
FIG. 5 and FIG. 6 are each a schematic diagram of an oil pump of a hydraulic system of a vehicle according to another embodiment of the present invention;
FIG. 7 is a schematic diagram of a cooling branch of a hydraulic system of a vehicle according to still another embodiment of the present invention;
FIG. 8 is a schematic diagram of constituent modules of a vehicle according to an embodiment of the present invention;
FIG. 9 is a schematic diagram of a method for controlling a hydraulic system of a vehicle according to an embodiment of the present invention; and
FIG. 10 is a schematic diagram of a vehicle according to an embodiment of the present invention.

### DETAILED DESCRIPTION

Embodiments of the present invention will be described in detail below with reference to the accompanying drawings in which the same or like reference characters refer to the same or like elements or elements having the same or like functions throughout. The embodiments described below with reference to the accompanying drawings are exemplary, and are intended to explain the present invention, rather than limiting the present invention.

A vehicle 1000, a hydraulic system for a powertrain of a vehicle 1000, and a method for controlling same according to the embodiments of the present invention will be described in detail below with reference to the accompanying drawings.

An embodiment of a first aspect of the present invention provides a vehicle 1000 with a hydraulic system 100 for a powertrain of the vehicle 1000. The vehicle 1000 includes one or more of a drive motor, a generator, a clutch, and a transmission system. The hydraulic system includes an oil tank 10, a main cooling oil path m, and a plurality of cooling branches.

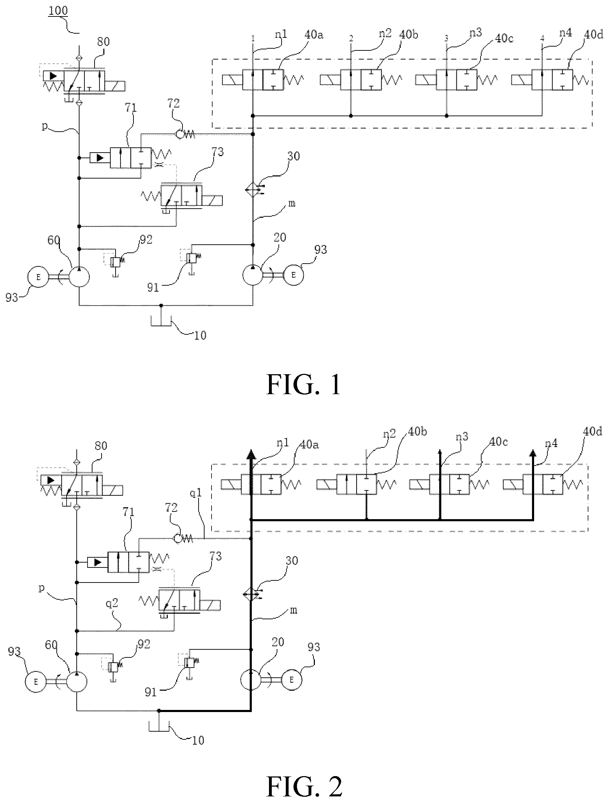

As shown in FIG. 1, one end of the main cooling oil path m is communicated with the oil tank (10), and a first oil pump 20 is arranged on the main cooling oil path m. The first oil pump 20 is configured to pump an oil in the oil tank 10 to the cooling branches. The plurality of cooling branches are connected to another end of the main cooling oil path m. An independently controlled control element is arranged on each of the plurality of cooling branches. The control element is configured to control opening and closing of the corresponding cooling branch. The plurality of cooling branches are configured to cool one or more of a drive motor 50a, a clutch 50b, a transmission system 50c, and a generator 50d.

Each of the cooling branches n corresponds to cooling of one power terminal. The power terminal includes but is not limited to the drive motor 50a, the clutch 50b, the transmission system 50c, and the generator 50d.

Therefore, the cooling branches and the control elements form an integrated cooling valve group structure, and each solenoid valve can independently open or close and adjust the cooling branch, to realize independent flow control, thereby independently adjusting and controlling the cooling flow for each power terminal.

In some embodiments, the cooling branches at least include a first cooling branch n1, a second cooling branch n2, a third cooling branch n3, and a fourth cooling branch n4. The first cooling branch n1 is configured to cool the drive motor 50a. The second cooling branch n2 is configured to cool the generator 50d. The third cooling branch n3 is configured to cool the clutch 50b. The fourth cooling branch n4 is configured to cool the transmission system 50c. Accordingly, the control elements on the cooling branches are respectively a first control element 40a, a second control element 40b, a third control element 40c, and a fourth control element 40d.

Therefore, there is a form of energy consumption or multiple energy sources participating in driving at the same time in the operation of a hybrid vehicle. For example, the hybrid vehicle is in an electric vehicle mode (where the drive motor 50a participates in driving, but an engine and the generator 50d do not operate) or a parallel mode (where the engine and the drive motor 50a participate in driving at the same time). The drive motor 50a, the generator 50d, the clutch 50b, and the transmission system 50c are respectively cooled by the first cooling branch n1, the second cooling branch n2, the third cooling branch n3, and the fourth cooling branch n4. A cooler 30 is arranged on the main cooling oil path m to cool the oil in the main cooling oil path m and the cooling branches. This not only can realize the cooling of each power terminal, but also provides a cooling effect.

The control elements are proportional adjustment solenoid valves, and each of the proportional adjustment solenoid valves is configured to receive a signal sent by a vehicle controller and adjust an opening degree of the proportional adjustment solenoid valve according to the signal. Therefore, the proportional adjusting solenoid valves not only can control the opening and closing of the corresponding cooling branches, but also can adjust the flow rate in each cooling branch as required.

In the embodiment of the first aspect shown in FIG. 1 and FIG. 2, the hydraulic system 100 of the vehicle 1000 further includes a driving oil path p. The driving oil path p is connected between the oil tank 10 and the clutch 50b. A second oil pump 60 and a pressure control solenoid valve 80 are arranged on the driving oil path p. The second oil pump 60 is configured to pump the oil to the driving oil path p. The driving oil path p is configured to supply the oil to the clutch.

In this way, the driving oil path p is connected between the clutch and the oil tank 10 and outputs pressure to control the closing and opening of the clutch. When pressure of the clutch needs to be increased according to a driving pressure requirement and current pressure of the clutch, the pressure control solenoid valve 80 is communicated with the driving oil path p and the clutch and controls the second oil pump 60 to operate. When pressure of the clutch needs to be relieved, the pressure control solenoid valve 80 blocks the communication between the driving oil path p and the clutch, and communicates the oil tank 10 and the clutch.

In addition, the main cooling oil path m may further be connected to a first safety branch. The first safety branch is located between the cooler 30 and the first oil pump 20. A first safety valve 91 is arranged on the cooling branches. The first safety valve 91 is connected to the oil tank 10 to relieve pressure when oil pressures in the main cooling oil path m and the cooling branches exceed a preset pressure.

Similarly, the driving oil path p may further be connected to a second safety branch. The second safety branch is arranged close to the second oil pump 60. The second safety valve 92 is connected to the oil tank 10 to relieve pressure when an oil pressure in the driving oil path p exceeds a preset pressure.

In some embodiments, as shown in FIG. 1 to FIG. 4, the hydraulic system of the vehicle 1000 further includes two pump motors 93, one of the pump motors 93 is in transmission connection with the first oil pump 20 and the other pump motor 93 is in transmission connection with the second oil pump 60. The first oil pump 20 and the second oil pump 60 are respectively controlled by the two pump motors 93, so that the oil pressures in the driving oil path p and the main cooling oil path m can be precisely controlled respectively.

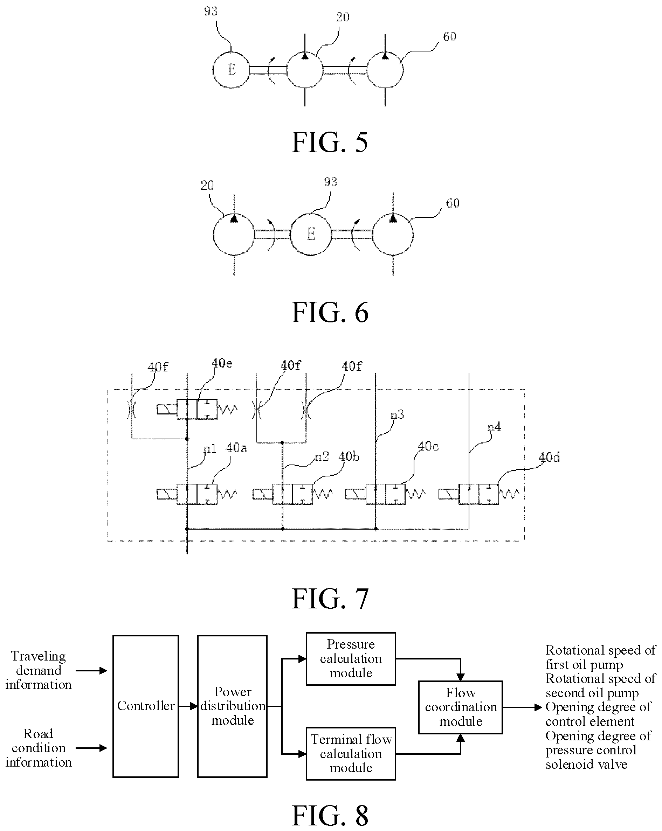

In some other embodiments, as shown in FIG. 6, the hydraulic system of the vehicle 1000 further includes one pump motor 93, one end of the pump motor 93 is connected to the first oil pump 20, and another end of the pump motor 93 is connected to the second oil pump 60;

Alternatively, as shown in FIG. 5, the hydraulic system of the vehicle 1000 further includes one pump motor 93, one end of the pump motor 93 is sequentially in serial transmission connection with the first oil pump 20 and the second oil pump 60. The first oil pump 20 and the second oil pump 60 are simultaneously controlled by the one pump motor 93, thereby simplifying the structure of the hydraulic system 100 and reducing the costs of the hydraulic system 100.

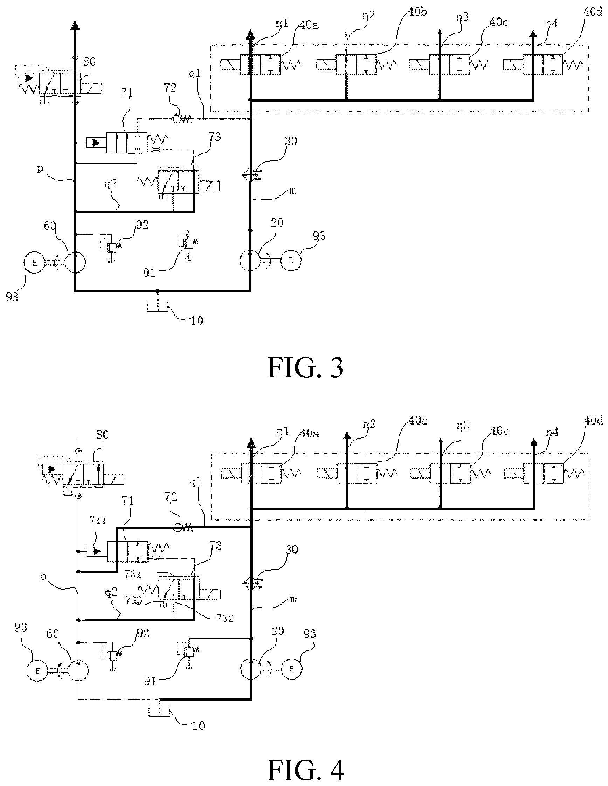

As shown in FIG. 3, the hydraulic system 100 of the vehicle 1000 further includes a replenishing oil path, the replenishing oil path is connected between the driving oil path p and the main cooling oil path m, and when the replenishing oil path is switched to communicate with the main cooling oil path, the oil in the driving oil path p flows unidirectionally to the main cooling oil path m.

Therefore, when the pressure control solenoid valve 80 is opened, the oil in the oil tank 10 may be pumped out by the second oil pump 60 through the driving oil path p and supplied to the clutch, the replenishing oil path is disconnected, and the driving oil path p and the second oil pump 60 are not used to replenish oil to the main cooling oil path m. When the flow in the cooling oil path is insufficient, the cooling oil path needs to be replenished with oil through the driving oil path, and the pressure control solenoid valve 80 is closed. In this case, the replenishing oil path is switched to communicate the driving oil path p with the main cooling oil path m under the action of pressure, and the oil in the oil tank 10 enters the replenishing oil path through the driving oil path p and the second oil pump 60, to provide an oil replenishing function for the cooling branches.

In the embodiment shown in FIG. 4, the replenishing oil path includes a main replenishing oil path q1 and a regulating oil path q2. A pressure slide valve 71 and a one-way valve 72 are arranged on the main replenishing oil path q1. An inlet of the pressure slide valve 71 is connected to the driving oil path p. An outlet of the pressure slide valve 71 is connected to the main cooling oil path m through the one-way valve 72. The pressure slide valve 71 is opened when a pressure in the driving oil path p is greater than an opening threshold of the pressure slide valve 71. One end of the regulating oil path q2 is connected to the pressure slide valve 71, another end of the regulating oil path q2 is connected to the driving oil path p. A pressure solenoid valve 73 is further arranged on the regulating oil path q2. The pressure solenoid valve 73 is configured to adjust the opening threshold of the pressure slide valve 71.

In this way, the connection to or disconnection from the replenishing oil path may be realized by controlling the pressure in the driving oil path p. When the pressure in the driving oil path p is within a threshold range, the pressure solenoid valve 73 is controlled to be opened, to switch the regulating oil path q2 to communicate with a throttle hole 731 of the pressure slide valve 71. The pressure solenoid valve 73 can control the flow rate and the pressure of the throttle hole 731, to control the pressure slide valve 71 to enter an open state or a closed state, thereby realizing connection and disconnection of the main replenishing oil path q1. Therefore, the use of the electrically controlled pressure solenoid valve 73, the second oil pump 60, and the pressure slide valve 71 can realize connection and disconnection of the replenishing oil path, and achieve sensitive response.

In the embodiment shown in FIG. 7, the cooling branch further includes a plurality of sub-branches, and a sub-branch solenoid valve 40e or a sub-branch throttle valve 40f is arranged on each of the sub-branches. Therefore, the plurality of sub-branches can also cool different power terminals.

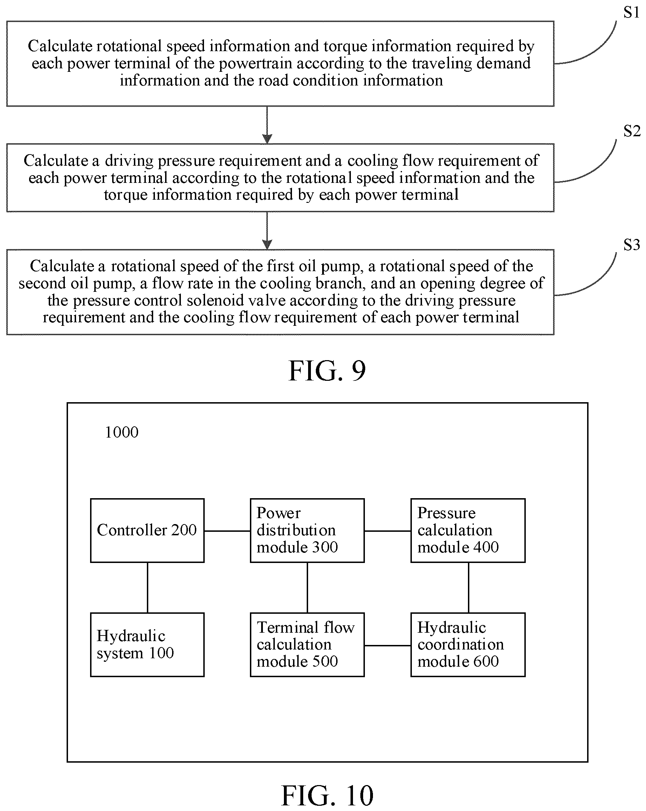

As shown in FIG. 8 and FIG. 10, a vehicle 1000 according to an embodiment of the first aspect of the present invention includes the hydraulic system 100 of the above embodiments, a controller 200, a power distribution module 300, a pressure calculation module 400, a terminal flow calculation module 500, and a flow coordination module.

The controller 200 is configured to receive traveling demand information and road condition information. For example, in a conventional driving mode, accelerator pedal information and road slope information are obtained. In an assisted driving mode, driver demand information and road condition prediction information are obtained. In an autonomous driving mode, acceleration requirement information is obtained.

The power distribution module 300 is configured to calculate rotational speed information and torque information required by each power terminal of the powertrain according to the traveling demand information and the road condition information. The power terminal includes one or more of a drive motor, a generator, a clutch, and a transmission system.

The pressure calculation module 400 is configured to calculate a driving pressure requirement according to the rotational speed information and the torque information from the power distribution module 300. Based on power transmission paths of the power distribution module 300, the pressure calculation module 400 calculates pressure requirements for switching between different power transmission paths, for example, a clutch engagement pressure requirement for switching from an engine serial mode to an engine-driven vehicle mode.

The terminal flow calculation module 500 is configured to calculate a cooling flow requirement of each power terminal according to the rotational speed information and the torque information from the power distribution module 300 and oil temperature information of the main cooling oil path.

The hydraulic coordination module 600 is configured to calculate a rotational speed of the first oil pump, a rotational speed of the second oil pump, the opening degree of the control element, and an opening degree of the pressure control solenoid valve according to the driving pressure requirement and the cooling flow requirement of each power terminal. In other words, rotational speed information of the first oil pump and opening degree information of the pressure control solenoid valve and the control elements are calculated according to the pressure requirement from the pressure calculation module 400 and a summarized flow requirement from the terminal flow calculation module 500. Rotational speed information of the second oil pump is calculated according to the summarized flow requirement of the terminal flow calculation module 500. According to the cooling flow requirement of each power terminal, flow information of the corresponding control element (which may be a solenoid valve) is calculated. Therefore, the terminal flow calculation part calculates, according to performance of each component at different temperatures, a cooling flow requirement corresponding to optimal efficiency of the component.

As shown in FIG. 9, an embodiment of a second aspect of the present invention provides a method for controlling a hydraulic system 100 for a powertrain of a vehicle, including the following steps.

S1: A power requirement of the powertrain is calculated according to driver demand information and predicted road condition information, and rotational speed information and torque information required by each power terminal of the powertrain are calculated.

S2: A flow requirement of each power terminal is calculated according to the rotational speed information and the torque information. A pressure requirement of the hydraulic system 100 is calculated according to a required pressure and the flow requirement of each power terminal.

S3: Rotational speeds of the oil pumps and a pressure and flow control signal required by each solenoid valve are calculated according to the pressure requirement and the flow requirement of each power terminal.

In this way, a cooling requirement of each component and a total cooling flow requirement are calculated according to a status of the vehicle, and oil pump signals are output, so that the system flow supply can be adjusted as required, thereby reducing the flow loss. By controlling the cooling flow to enable each power terminal to operate in an efficient temperature range, the cooling flow for each power terminal can be distributed as required, thereby improving the system efficiency.

Refer to Table 1 below for pressures of the hydraulic system 100 in different modes and the cooling flow for each power terminal.

**Table 1**

| Vehicle mode | Pressure | Cooling flow | | | |
|---|---|---|---|---|---|
| | | Drive motor | Generator | Clutch | Transmission system |
| EV | / | *q*₁ | / | *q*₃ | *q*₄ |
| Parallel connection | P1 | *q*₁' | *q₂'* | *q*_{3'} | *q*₄' |
| Serial connection | P2 | *q*₁" | *q*₂" | *q*₃" | *q*₄" |

Therefore, in the electric vehicle mode, there is no need to supply oil to the generator 50d; in the parallel mode, the second oil pump 60 supplies oil to the driving oil path p and the first oil pump 20 supplies coolant to the cooling branch; In the serial mode, the second oil pump 60 replenishes oil to the main cooling oil path m through the replenishing oil path.

Moreover, the terms "first" and "second" are used herein for purposes of description, and are not intended to indicate or imply relative importance or implicitly point out the number of the indicated technical feature. Therefore, the features defined by "first" and "second" may explicitly or implicitly include one or more features. In the description of the present invention, "multiple" and "a plurality of' mean two or more, unless otherwise particularly defined.

In the description of the specification, the description with reference to the terms "an embodiment", "some embodiments", "example", "specific example", or "some example" and so on means that specific features, structures, materials or characteristics described in connection with the embodiment or example are embraced in at least one embodiment or example of the present invention. In the specification, the illustrative expression of the above terms is not necessarily referring to the same embodiment or example. Moreover, the described specific features, structures, materials or characteristics may be combined in any suitable manners in one or more embodiments. In addition, where there are no contradictions, the various embodiments or examples described in this specification and features of various embodiments or examples can be combined by those skilled in the art.

Although the embodiments of the present invention have been illustrated and described above, it is to be understood that the above embodiments are exemplary and not to be construed as limiting the present invention, and that changes, modifications, substitutions and alterations can be made by those skilled in the art without departing from the scope of the present invention as defined by the appended claims.

## Claims

1. A vehicle (1000), comprising:
a powertrain comprising one or more of a drive motor, a generator, a clutch, and a transmission system;
a hydraulic system (100) comprising:
an oil tank (10);
a main cooling oil path (m), one end of the main cooling oil path (m) being communicated with the oil tank (10), and a first oil pump (20) and a cooler (30) being arranged on the main cooling oil path (m); and
a plurality of cooling branches (n1, n2, n3, n4), the plurality of cooling branches (n1, n2, n3, n4) being connected to another end of the main cooling oil path (m), the first oil pump (20) being configured to pump an oil in the oil tank (10) to the cooling branches (n1, n2, n3, n4), a control element (40a, 40b, 40c, 40d) being arranged on each of the cooling branches (n1, n2, n3, n4), the control element (40a, 40b, 40c, 40d) being configured to control opening and closing of the corresponding cooling branch (n1, n2, n3, n4), and the plurality of cooling branches (n1, n2, n3, n4) being configured to cool one or more of the drive motor, the generator, the clutch, and the transmission system,
a driving oil path (p), the driving oil path (p) is connected between the oil tank (10) and the clutch, a second oil pump (60) and a pressure control solenoid valve (80) are arranged on the driving oil path (p), the second oil pump (60) is configured to pump the oil to the driving oil path (p), and the driving oil path (p) is configured to control engagement and disengagement of the clutch;
**characterized in that** the vehicle (1000) further comprises:
a controller (200), configured to receive traveling demand information and road condition information;
a power distribution module (300), configured to calculate rotational speed information and torque information required by each power terminal of the powertrain according to the traveling demand information and the road condition information, wherein the power terminal comprises one or more of a drive motor, a generator, a clutch, and a transmission system;
a pressure calculation module (400), configured to calculate a driving pressure requirement according to the rotational speed information and the torque information from the power distribution module (300);
a terminal flow calculation module (500), configured to calculate a cooling flow requirement of each power terminal according to the rotational speed information and the torque information from the power distribution module (300) and oil temperature information of the main cooling oil path (m); and
a hydraulic coordination module (600), configured to calculate a rotational speed of the first oil pump (20), a rotational speed of the second oil pump (60), the opening degree of the control element (40a, 40b, 40c, 40d), and an opening degree of the pressure control solenoid valve (80) according to the driving pressure requirement and the cooling flow requirement of each power terminal.

2. The vehicle (1000) according to claim 1, wherein the cooling branches (n1, n2, n3, n4) at least comprise a first cooling branch (n1), a second cooling branch (n2), a third cooling branch (n3), and a fourth cooling branch (n4), the first cooling branch (n1) is configured to cool the drive motor, the second cooling branch (n2) is configured to cool the generator, the third cooling branch (n3) is configured to cool the clutch, and the fourth cooling branch (n4) is configured to cool the transmission system.

3. The vehicle (1000) according to claim 1 to 2, wherein the control elements (40a, 40b, 40c, 40d) are proportional adjustment solenoid valves, and each of the proportional adjustment solenoid valves is configured to receive a signal sent by a vehicle controller and adjust an opening degree of the proportional adjustment solenoid valve according to the signal.

4. The vehicle (1000) according to any one of claims 1 to 3, the hydraulic system further comprising two pump motors (93), one of the pump motors (93) being in transmission connection with the first oil pump (20) and the other pump motor (93) being in transmission connection with the second oil pump (60); or
further comprising one pump motor (93), one end of the pump motor (93) being connected to the first oil pump (20), and another end of the pump motor (93) being connected to the second oil pump (60); or
further comprising one pump motor (93), one end of the pump motor (93) being sequentially in serial transmission connection with the first oil pump (20) and the second oil pump (60).

5. The vehicle (1000) according to any of claims 1 to 4, the hydraulic system further comprising a replenishing oil path, the replenishing oil path being connected between the driving oil path (p) and the main cooling oil path (m), and wherein when the replenishing oil path is switched to communicate with the main cooling oil path (m), the oil in the driving oil path (p) flows unidirectionally to the main cooling oil path (m).

6. The vehicle (1000) according to claim 5, wherein the replenishing oil path comprises:
a main replenishing oil path (q1), a pressure slide valve (71) and a one-way valve (72) are arranged on the main replenishing oil path (q1), an inlet of the pressure slide valve (71) is connected to the driving oil path (p), an outlet of the pressure slide valve (71) is connected to the main cooling oil path (m) through the one-way valve (72), and the pressure slide valve (71) is opened when a pressure in the driving oil path (p) is greater than an opening threshold of the pressure slide valve (71); and
a regulating oil path (q2), one end of the regulating oil path (q2) is connected to the pressure slide valve (71), another end of the regulating oil path (q2) is connected to the driving oil path (p), a pressure solenoid valve (73) is further arranged on the regulating oil path (q2), the pressure solenoid valve (73) is configured to adjust the opening threshold of the pressure slide valve (71).

7. The vehicle (1000) according to any one of claims 1-6, wherein the cooling branch (n1, n2, n3, n4) further comprises a plurality of sub-branches, and a sub-branch solenoid valve (40e) or a sub-branch throttle valve (40f) is arranged on each of the sub-branches.

8. A method for controlling a hydraulic system (100) for a powertrain of a vehicle (1000) according to any one of claims 1-7, **characterized in that** the method comprises:
calculating rotational speed information and torque information required by each power terminal of the powertrain according to the traveling demand information and the road condition information;
calculating a driving pressure requirement and a cooling flow requirement of each power terminal according to the rotational speed information and the torque information required by each power terminal; and
calculating a rotational speed of the first oil pump (20), a rotational speed of the second oil pump (60), a flow rate in the cooling branch, and an opening degree of the pressure control solenoid valve (80) according to the driving pressure requirement and the cooling flow requirement of each power terminal.

## Patentansprüche

1. Fahrzeug (1000), umfassend:
einen Antriebsstrang mit einem oder mehreren Antriebsmotoren, einem Generator, einer Kupplung und einem Getriebesystem;
ein hydraulisches System (100), umfassend:
einen Öltank (10);
einen Hauptkühlölpfad (m), wobei ein Ende des Hauptkühlölpfads (m) mit dem Öltank (10) in Verbindung steht und eine erste Ölpumpe (20) und ein Kühler (30) auf dem Hauptkühlölpfad (m) angeordnet sind; und
eine Mehrzahl von Kühlzweigen (n1, n2, n3, n4), wobei die Mehrzahl von Kühlzweigen (n1, n2, n3, n4) mit einem anderen Ende des Hauptkühlölpfades (m) verbunden ist, wobei die erste Ölpumpe (20) konfiguriert ist, um ein Öl in dem Öltank (10) zu den Kühlzweigen (n1, n2, n3, n4) zu pumpen, wobei ein Steuerelement (40a, 40b, 40c, 40d) an jedem der Kühlzweige (n1, n1, n2, n3, n4) angeordnet ist, wobei das Steuerelement (40a, 40b, 40c, 40d) zum Steuern des Öffnens und Schließens des entsprechenden Kühlzweigs (n1, n2, n3, n4) konfiguriert ist, und wobei die mehreren Kühlzweige (n1, n2, n3, n4) zum Kühlen des Antriebsmotors, des Generators, der Kupplung oder des Getriebesystems konfiguriert sind,
einen Antriebsölpfad (p), wobei der Antriebsölpfad (p) zwischen dem Öltank (10) und der Kupplung angeschlossen ist, eine zweite Ölpumpe (60) und ein Drucksteuermagnetventil (80) auf dem Antriebsölpfad (p) angeordnet sind, die zweite Ölpumpe (60) so konfiguriert ist, dass sie das Öl zu dem Antriebsölpfad (p) pumpt, und der Antriebsölpfad (p) so konfiguriert ist, dass er das Einrücken und Ausrücken der Kupplung steuert;
**dadurch gekennzeichnet, dass** das Fahrzeug (1000) weiterhin umfasst:
ein Steuergerät (200), das so konfiguriert ist, dass es Informationen über den Fahrbedarf und über den Straßenzustand empfängt;
ein Leistungsverteilungsmodul (300), das so konfiguriert ist, dass es Drehzahlinformationen und Drehmomentinformationen berechnet, die von jedem Leistungsanschluss des Antriebsstrangs gemäß den Fahrbedarfsinformationen und den Straßenzustandsinformationen benötigt werden, wobei der Leistungsanschluss einen oder mehrere von einem Antriebsmotor, einem Generator, einer Kupplung und einem Übertragungssystem umfasst;
ein Druckberechnungsmodul (400), das so konfiguriert ist, dass es eine Antriebsdruckanforderung gemäß der Drehzahlinformation und der Drehmomentinformation von dem Energieverteilungsmodul (300) berechnet;
ein Klemmenstromberechnungsmodul (500), das so konfiguriert ist, dass es einen Kühlstrombedarf jeder Leistungsklemme gemäß der Drehzahlinformation und der Drehmomentinformation von dem Leistungsverteilungsmodul (300) und der Öltemperaturinformation des Hauptkühlölwegs (m) berechnet; und
ein hydraulisches Koordinationsmodul (600), das so konfiguriert ist, dass es eine Drehzahl der ersten Ölpumpe (20), eine Drehzahl der zweiten Ölpumpe (60), den Öffnungsgrad des Steuerelements (40a, 40b, 40c, 40d) und einen Öffnungsgrad des Drucksteuermagnetventils (80) entsprechend der Antriebsdruckanforderung und der Kühlstromanforderung jedes Leistungsanschlusses berechnet.

2. Fahrzeug (1000) nach Anspruch 1, wobei die Kühlzweige (n1, n2, n3, n4) mindestens einen ersten Kühlzweig (n1), einen zweiten Kühlzweig (n2), einen dritten Kühlzweig (n3) und einen vierten Kühlzweig (n4) umfassen, der erste Kühlzweig (n1) zum Kühlen des Antriebsmotors, der zweite Kühlzweig (n2) zum Kühlen des Generators, der dritte Kühlzweig (n3) zum Kühlen der Kupplung und der vierte Kühlzweig (n4) zum Kühlen des Getriebesystems ausgebildet ist.

3. Fahrzeug (1000) nach Anspruch 1 bis 2, wobei die Steuerelemente (40a, 40b, 40c, 40d) Proportionaleinstell-Magnetventile sind und jedes der Proportionaleinstell-Magnetventile so konfiguriert ist, dass es ein von einer Fahrzeugsteuerung gesendetes Signal empfängt und einen Öffnungsgrad des Proportionaleinstell-Magnetventils entsprechend dem Signal einstellt.

4. Fahrzeug (1000) nach einem der Ansprüche 1 bis 3, wobei das Hydrauliksystem ferner zwei Pumpenmotoren (93) umfasst, wobei einer der Pumpenmotoren (93) in Getriebeverbindung mit der ersten Ölpumpe (20) steht und der andere Pumpenmotor (93) in Getriebeverbindung mit der zweiten Ölpumpe (60) steht; oder
ferner einen Pumpenmotor (93) umfasst, wobei ein Ende des Pumpenmotors (93) mit der ersten Ölpumpe (20) verbunden ist und ein anderes Ende des Pumpenmotors (93) mit der zweiten Ölpumpe (60) verbunden ist; oder
ferner einen Pumpenmotor (93) umfasst, wobei ein Ende des Pumpenmotors (93) nacheinander in serieller Übertragungsverbindung mit der ersten Ölpumpe (20) und der zweiten Ölpumpe (60) steht.

5. Fahrzeug (1000) nach einem der Ansprüche 1 bis 4, wobei das Hydrauliksystem ferner einen Nachfüllölpfad umfasst, wobei der Nachfüllölpfad zwischen den Antriebsölpfad (p) und den Hauptkühlölpfad (m) geschaltet ist, und wobei, wenn der Nachfüllölpfad so geschaltet wird, dass er mit dem Hauptkühlölpfad (m) kommuniziert, das Öl im Antriebsölpfad (p) in einer Richtung zum Hauptkühlölpfad (m) fließt.

6. Fahrzeug (1000) nach Anspruch 5, wobei der Nachfüllölpfad umfasst:
ein Hauptnachfüllölpfad (q1), ein Druckschieberventil (71) und ein Einwegventil (72) am Hauptnachfüllölpfad (q1) angeordnet sind, ein Einlass des Druckschieberventils (71) mit dem Antriebsölpfad (p) verbunden ist, ein Auslass des Druckschiebers (71) über das Einwegventil (72) mit dem Hauptkühlölpfad (m) verbunden ist, und der Druckschieber (71) geöffnet wird, wenn ein Druck im Antriebsölpfad (p) größer ist als ein Öffnungsschwellenwert des Druckschiebers (71); und
einen Regelölpfad (q2), wobei ein Ende des Regelölpfads (q2) mit dem Druckschieberventil (71) verbunden ist, ein anderes Ende des Regelölpfads (q2) mit dem Antriebsölpfad (p) verbunden ist, ein Druckmagnetventil (73) ferner auf dem Regelölpfad (q2) angeordnet ist, wobei das Druckmagnetventil (73) konfiguriert ist, um die Öffnungsschwelle des Druckschieberventils (71) einzustellen.

7. Fahrzeug (1000) nach einem der Ansprüche 1 bis 6, wobei der Kühlzweig (n1, n2, n3, n4) ferner mehrere Teilzweige umfasst und an jedem der Teilzweige ein Teilzweig-Magnetventil (40e) oder ein Teilzweig-Drosselventil (40f) angeordnet ist.

8. Verfahren zur Steuerung eines Hydrauliksystems (100) für einen Antriebsstrang eines Fahrzeugs (1000) nach einem der Ansprüche 1-7, **dadurch gekennzeichnet, dass** das Verfahren umfasst:
Berechnung von Drehzahlinformationen und Drehmomentinformationen, die von jedem Leistungsanschluss des Antriebsstrangs gemäß den Fahrbedarfsinformationen und den Straßenzustandsinformationen benötigt werden;
Berechnen eines Antriebsdruckbedarfs und eines Kühlstrombedarfs jedes Leistungsanschlusses gemäß der Drehzahlinformation und der Drehmomentinformation, die von jedem Leistungsanschluss benötigt werden; und
Berechnen einer Drehzahl der ersten Ölpumpe (20), einer Drehzahl der zweiten Ölpumpe (60), eines Durchflusses im Kühlzweig und eines Öffnungsgrads des Drucksteuermagnetventils (80) entsprechend der Antriebsdruckanforderung und der Kühlstromanforderung jedes Leistungsanschlusses.

## Revendications

1. Un véhicule (1000), comprenant :
un groupe motopropulseur comprenant un ou plusieurs moteurs d'entraînement, un générateur, un embrayage et un système de transmission ;
un système hydraulique (100) comprenant :
un réservoir d'huile (10) ;
un chemin principal d'huile de refroidissement (m), une extrémité du chemin principal d'huile de refroidissement (m) étant communiquée avec le réservoir d'huile (10), et une première pompe à huile (20) et un refroidisseur (30) étant disposés sur le chemin principal d'huile de refroidissement (m) ; et
une pluralité de branches de refroidissement (n1, n2, n3, n4), la pluralité de branches de refroidissement (n1, n2, n3, n4) étant reliée à une autre extrémité du chemin principal d'huile de refroidissement (m), la première pompe à huile (20) étant configurée pour pomper une huile dans le réservoir d'huile (10) vers les branches de refroidissement (n1, n2, n3, n4), un élément de commande (40a, 40b, 40c, 40d) étant disposé sur chacune des branches de refroidissement (n1, n2, n3, n4), l'élément de commande (40a, 40b, 40c, 40d) étant configuré pour commander l'ouverture et la fermeture de la branche de refroidissement correspondante (n1, n2, n3, n4), et la pluralité de branches de refroidissement (n1, n2, n3, n4) étant configurée pour refroidir un ou plusieurs éléments parmi le moteur d'entraînement, le générateur, l'embrayage et le système de transmission,
une voie d'huile motrice (p), la voie d'huile motrice (p) est reliée entre le réservoir d'huile (10) et l'embrayage, une deuxième pompe à huile (60) et une électrovanne de contrôle de pression (80) sont disposées sur la voie d'huile motrice (p), la deuxième pompe à huile (60) est configurée pour pomper l'huile vers la voie d'huile motrice (p), et la voie d'huile motrice (p) est configurée pour contrôler l'engagement et le désengagement de l'embrayage ;
**caractérisé par le fait que** le véhicule (1000) comprend en outre :
un contrôleur (200), configuré pour recevoir des informations sur la demande de transport et sur l'état des routes ;
un module de distribution de puissance (300), configuré pour calculer les informations relatives à la vitesse de rotation et au couple requises par chaque terminal de puissance du groupe motopropulseur en fonction des informations relatives à la demande de déplacement et des informations relatives à l'état de la route, le terminal de puissance comprenant un ou plusieurs moteurs d'entraînement, un générateur, un embrayage et un système de transmission ;
un module de calcul de la pression (400), configuré pour calculer une pression de conduite requise en fonction des informations relatives à la vitesse de rotation et au couple fournies par le module de distribution de puissance (300) ;
un module de calcul du débit terminal (500), configuré pour calculer le besoin en débit de refroidissement de chaque terminal de puissance en fonction des informations relatives à la vitesse de rotation et au couple fournies par le module de distribution de puissance (300) et des informations relatives à la température de l'huile dans le circuit principal de refroidissement (m) ; et
un module de coordination hydraulique (600), configuré pour calculer une vitesse de rotation de la première pompe à huile (20), une vitesse de rotation de la deuxième pompe à huile (60), le degré d'ouverture de l'élément de commande (40a, 40b, 40c, 40d) et un degré d'ouverture de l'électrovanne de contrôle de la pression (80) en fonction de la pression d'entraînement requise et du débit de refroidissement requis pour chaque terminal de puissance.

2. Le véhicule (1000) selon la revendication 1, dans lequel les branches de refroidissement (n1, n2, n3, n4) comprennent au moins une première branche de refroidissement (n1), une deuxième branche de refroidissement (n2), une troisième branche de refroidissement (n3), et une quatrième branche de refroidissement (n4), la première branche de refroidissement (n1) est configurée pour refroidir le moteur d'entraînement, la deuxième branche de refroidissement (n2) est configurée pour refroidir le générateur, la troisième branche de refroidissement (n3) est configurée pour refroidir l'embrayage, et la quatrième branche de refroidissement (n4) est configurée pour refroidir le système de transmission.

3. Le véhicule (1000) selon la revendication 1 à 2, dans lequel les éléments de commande (40a, 40b, 40c, 40d) sont des électrovannes de réglage proportionnel, et chacune des électrovannes de réglage proportionnel est configurée pour recevoir un signal envoyé par un contrôleur du véhicule et ajuster un degré d'ouverture de l'électrovanne de réglage proportionnel en fonction du signal.

4. Le véhicule (1000) selon l'une quelconque des revendications 1 à 3, le système hydraulique comprenant en outre deux moteurs de pompe (93), l'un des moteurs de pompe (93) étant en liaison de transmission avec la première pompe à huile (20) et l'autre moteur de pompe (93) étant en liaison de transmission avec la deuxième pompe à huile (60) ; ou
comprenant en outre un moteur de pompe (93), une extrémité du moteur de pompe (93) étant reliée à la première pompe à huile (20), et une autre extrémité du moteur de pompe (93) étant reliée à la deuxième pompe à huile (60) ; ou
comprenant en outre un moteur de pompe (93), une extrémité du moteur de pompe (93) étant séquentiellement en connexion de transmission en série avec la première pompe à huile (20) et la seconde pompe à huile (60).

5. Le véhicule (1000) selon l'une des revendications 1 à 4, le système hydraulique comprenant en outre un chemin d'huile de remplissage, le chemin d'huile de remplissage étant connecté entre le chemin d'huile de conduite (p) et le chemin d'huile de refroidissement principal (m), et dans lequel, lorsque le chemin d'huile de remplissage est commuté pour communiquer avec le chemin d'huile de refroidissement principal (m), l'huile dans le chemin d'huile de conduite (p) s'écoule de manière unidirectionnelle vers le chemin d'huile de refroidissement principal (m).

6. Le véhicule (1000) selon la revendication 5, dans lequel le chemin de réapprovisionnement en huile comprend :
une voie principale de remplissage d'huile (q1), un tiroir de pression (71) et une vanne à sens unique (72) sont disposés sur la voie principale de remplissage d'huile (q1), une entrée du tiroir de pression (71) est reliée à la voie d'huile d'entraînement (p), une sortie du tiroir de pression (71) est reliée au circuit principal d'huile de refroidissement (m) par l'intermédiaire de la vanne à sens unique (72), et le tiroir de pression (71) est ouvert lorsqu'une pression dans le circuit d'huile d'entraînement (p) est supérieure à un seuil d'ouverture du tiroir de pression (71) ; et
un chemin d'huile de régulation (q2), une extrémité du chemin d'huile de régulation (q2) est reliée au tiroir de pression (71), une autre extrémité du chemin d'huile de régulation (q2) est reliée au chemin d'huile d'entraînement (p), une électrovanne de pression (73) est également disposée sur le chemin d'huile de régulation (q2), l'électrovanne de pression (73) est configurée pour ajuster le seuil d'ouverture du tiroir de pression (71).

7. Le véhicule (1000) selon l'une des revendications 1 à 6, dans lequel la branche de refroidissement (n1, n2, n3, n4) comprend en outre plusieurs sous-branches, et une électrovanne de sous-branche (40e) ou une vanne d'étranglement de sous-branche (40f) est disposée sur chacune des sous-branches.

8. Procédé de commande d'un système hydraulique (100) pour un groupe motopropulseur d'un véhicule (1000) selon l'une quelconque des revendications 1 à 7, **caractérisé en ce que** le procédé comprend :
calculer les informations relatives à la vitesse de rotation et au couple requises par chaque borne de puissance du groupe motopropulseur en fonction des informations relatives à la demande de déplacement et des informations relatives à l'état de la route ;
calculer la pression d'entraînement requise et le débit de refroidissement requis pour chaque terminal de puissance en fonction des informations relatives à la vitesse de rotation et au couple requis par chaque terminal de puissance ; et
calculer une vitesse de rotation de la première pompe à huile (20), une vitesse de rotation de la deuxième pompe à huile (60), un débit dans la branche de refroidissement et un degré d'ouverture de l'électrovanne de régulation de pression (80) en fonction de la pression d'entraînement requise et du débit de refroidissement requis pour chaque terminal de puissance.
